# EUROPEAN PATENT APPLICATION

(11) **EP 4 435 511 A1**
(43) Date of publication of application: **25.09.2024**
(21) Application number: 22895425.1
(22) Date of filing: 31.10.2022
(51) Int. Cl.: G03B 15/02, G03B 15/00, G03B 17/02, G03B 17/56, G03B 29/00, H04N 23/56, H04N 23/74

(54) **IMAGING APPARATUS**

(30) Priority: 19.11.2021 JP 2021188639
(71) Applicant: Sharp Kabushiki Kaisha, Sakai-ku Sakai-shi, Osaka 590-8522 (JP)
(72) Inventor: KUMAGAI Munesato, Sakai City, Osaka 590-8522 (JP)
(74) Representative: Treeby, Philip David William
(86) International application number: PCT/JP2022/040790
(87) International publication number: WO 2023/090142

(57) **Abstract**

An imaging apparatus (1) which is temporarily fixed to the outside of an observation window (102) of a cooker (100) to capture an image of a cooking chamber (105) of the cooker (100) comprises: an imaging device (11); a lighting device (13); a light quantity detection sensor (12); and a control device (14). The imaging device (11) generates captured image data. The lighting device (13) projects light in the imaging direction of the imaging device (11). The light quantity detection sensor (12) detects light quantity in the imaging direction. The control device (14) adjusts an output of the lighting device (13) on the basis of the light quantity detected by the light quantity detection sensor (12).

## Description

### Technical Field

The present invention relates to an imaging apparatus.

### Background Art

A cooking device provided with an imaging unit is widely known as a heating cooking appliance (Hereinafter, referred to as a cooking device.) such as a toaster, an oven, and a microwave oven mainly used at home (Patent Literature 1). In the cooking device described in Patent Literature 1, a video or the like captured by the imaging unit is transmitted to, for example, a smartphone or the like, and even if a user is away from the cooking device, the progress of cooking of an object can be confirmed. However, in the cooking device including the imaging unit as described in Patent Literature 1, in a case where it is desired to mount an imaging apparatus on the cooking device of the existing model, it is necessary to redesign the cooking device, and a burden on a designer increases.

Therefore, in order to reduce the burden on the designer, an imaging apparatus attachable to and detachable from the cooking device provided with an inspection window has been proposed.

### Citation List

### Patent Literature

Patent Literature 1: JP 2016-80210 A

### Summary of Invention

### Technical Problem

In the imaging apparatus attachable to and detachable from the cooking device provided with the inspection window, when the imaging apparatus is attached to the inspection window of the cooking device and a cooking chamber is imaged, an output of a lighting device is increased or decreased by the user's operation, and the output of the lighting device is adjusted until a light amount reaches an arbitrary light amount targeted by the user. That is, since the user needs to manually adjust the output of the lighting device, it has been difficult to adjust the output of the lighting device to a target light amount.

The present invention has been made in view of the above problems, and an object of the present invention is to provide an imaging apparatus capable of easily adjusting an output of a lighting device.

### Solution to Problem

According to a first aspect of the present invention, an imaging apparatus temporarily attached to an outside of an inspection window of a cooking device to image a cooking chamber of the cooking device includes an imaging unit, a lighting device, a sensor unit, and a control device. The imaging unit generates imaging data. The lighting device projects light in an imaging direction of the imaging unit. The sensor unit detects an amount of light in the imaging direction. The control device adjusts an output of the lighting device on the basis of the amount of light detected by the sensor unit.

### Advantageous Effects of Invention

According to the present invention, it is possible to easily adjust the output of the lighting device.

### Brief Description of Drawings

Fig. 1 is a front view illustrating an imaging apparatus according to a first embodiment.
Fig. 2 is a right side cross-sectional view illustrating the imaging apparatus according to the first embodiment.
Fig. 3 is a left side cross-sectional view illustrating a cooking device to which the imaging apparatus according to the first embodiment is temporarily fixed.
Fig. 4 is a rear view illustrating the imaging apparatus according to the first embodiment.
Fig. 5 is a front view illustrating a state in which the imaging apparatus according to the first embodiment is attached to the cooking device.
Fig. 6 is a diagram illustrating a state in which a user has removed the imaging apparatus according to the first embodiment.
Fig. 7 is a front view illustrating an imaging apparatus according to a second embodiment.

### Description of Embodiments

### [First Embodiment]

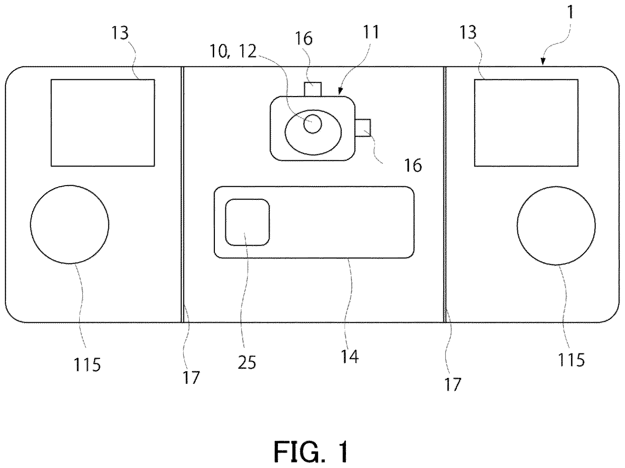

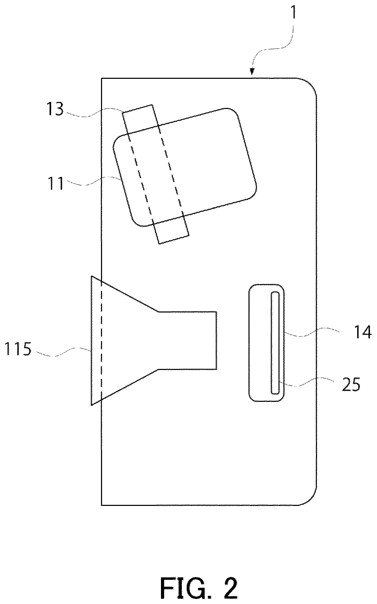

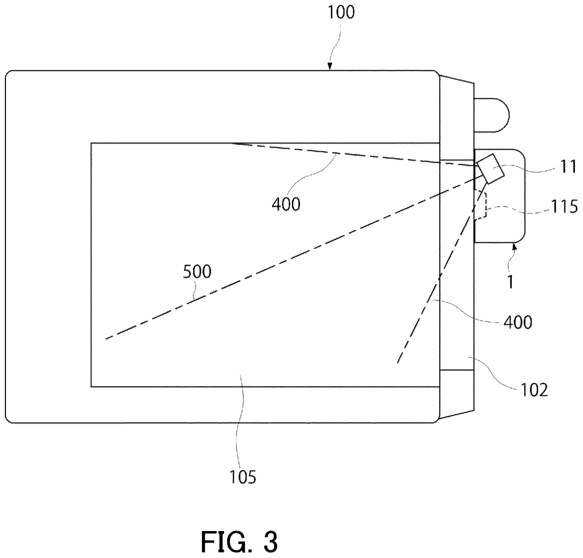

Fig. 1 is a front view of an imaging apparatus 1. Fig. 2 is a cross-sectional view of a right side surface of the imaging apparatus 1. Fig. 3 is a left side cross-sectional view illustrating a cooking device 100 to which the imaging apparatus 1 is temporarily fixed.

As illustrated in Fig. 3, the imaging apparatus 1 is temporarily attached to an outside of an inspection window 102 in the cooking device 100 to image a cooking chamber 105 of the cooking device 100. In the illustrated example, the imaging apparatus 1 can temporarily fix the imaging apparatus 1 by attracting two suckers 115 (see Fig. 1) as attachment/detachment mechanisms provided in the imaging apparatus 1 to the inspection window 102 of the cooking device 100.

As illustrated in Figs. 1 and 2, the imaging apparatus 1 includes an imaging device 11, two lighting devices 13, and a control device 14.

The imaging device 11 is an example of an imaging unit. The imaging device 11 is provided at an upper center of the imaging apparatus 1. The imaging device 11 is, for example, a camera. The imaging device 11 includes an image sensor 10. The image sensor 10 includes, for example, a CCD or a CMOS. The imaging device 11 generates imaging data. Furthermore, in the first embodiment, the imaging device 11 functions as a light amount detection sensor 12 that detects an amount of light. The light amount detection sensor 12 is an example of a sensor unit. Specifically, the image sensor 10 of the imaging device 11 functions as the light amount detection sensor 12. That is, the imaging device 11 generates imaging data and also detects the amount of light. Specifically, the imaging device 11 images an imaging range 400 (see Fig. 3), generates imaging data, and detects an amount of light in an imaging direction 500 of the imaging device 11. More specifically, an amount F1 of light reflected from the cooking chamber 105 (for example, an ingredient placed in the cooking chamber 105) of the cooking device 100 that is an imaging target of the imaging device 11 is detected. The amount F1 of light detected by the light amount detection sensor 12 is transmitted to the control device 14. The control device 14 acquires the amount F1 of light from the light amount detection sensor 12. The control device 14 generates information indicating the amount F1 of light and stores the information in a storage unit to be described later.

The two lighting devices 13 are provided on both sides of the imaging device 11. Each of the lighting devices 13 projects light to the imaging range 400 of the imaging device 11. The lighting device 13 is, for example, a light emitting diode (LED). By illuminating an object to be imaged with the lighting device 13, a good image can be obtained. Specifically, for example, by illuminating and imaging an ingredient to be captured in the cooking chamber 105 of the cooking device 100 that is darker than the outside, a good image can be obtained.

The control device 14 is provided inside the imaging apparatus 1. The control device 14 includes, for example, a processor such as a CPU. Furthermore, the control device 14 includes, for example, a storage unit. The storage unit is, for example, a semiconductor memory such as a random access memory (RAM) and a read only memory (ROM). Based on the amount F1 of light transmitted from the light amount detection sensor 12, the control device 14 adjusts an output of the lighting device 13 so as to obtain an amount of light suitable for imaging by the imaging device 11. Specifically, in a case where the amount F1 of light detected by the light amount detection sensor 12 is smaller than a threshold TH1, the control device 14 controls to increase the output of the lighting device 13. On the other hand, in a case where the amount F1 of light detected by the light amount detection sensor 12 is greater than or equal to the threshold TH1, the output of the lighting device 13 is controlled to be small.

The light amount detection sensor 12 detects the amount F1 of light in the imaging direction 500 of the imaging device 11, and the control device 14 adjusts the output of the lighting device 13 so that the output of the lighting device 13 becomes an output suitable for imaging on the basis of the amount F1 of light detected by the light amount detection sensor 12, whereby the imaging apparatus 1 capable of easily adjusting the output of the lighting device 13 can be provided to the user. Furthermore, since the control device 14 adjusts the output to an output suitable for imaging, a good video can be easily captured.

In order to prevent light from leaking from the two lighting devices 13 toward the imaging device 11, two partition walls 17 are provided.

In order to adjust an imaging angle by the imaging device 11 up, down, left, and right, two angle adjustment mechanisms 16 are provided.

A wireless communication device 25 provided in the control device 14 performs wireless communication with, for example, a smartphone. The wireless communication device 25 allows the user to view a video captured by the imaging device 11 of the imaging apparatus 1 on his/her smartphone or the like.

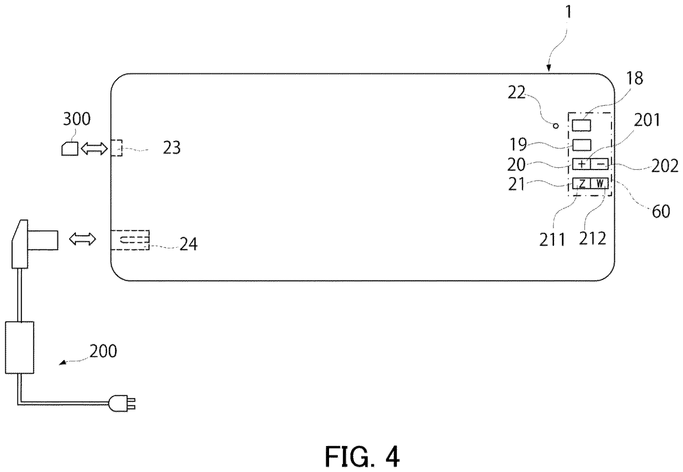

Fig. 4 is a rear view of the imaging apparatus 1 according to the first embodiment. The imaging apparatus 1 includes a light amount adjustment button 20. The light amount adjustment button 20 includes a light amount increase button 201 and a light amount decrease button 202.

The light amount adjustment button 20 manually instructs to change an amount of light emitted from the lighting device 13. The light amount adjustment button 20 further instructs lighting start and lighting end of the lighting device 13. Specifically, when the lighting device 13 is not turned on and the light amount adjustment button 20 is pressed by the user, a predetermined amount of light is sent from the lighting device 13. Thereafter, the control device 14 adjusts the output of the lighting device 13 so that the output is suitable for imaging. After the control device 14 adjusts the output of the lighting device 13, when the light amount increase button 201 is pressed by the user, the amount of light emitted from the lighting device 13 increases. Furthermore, when the light amount decrease button 202 is pressed by the user after the control device 14 adjusts the output of the lighting device 13, the amount of light emitted from the lighting device 13 decreases. When the light amount decrease button 202 is pressed after the amount of light emitted from the lighting device 13 decreases to a predetermined minimum amount of light, the lighting device 13 is turned off.

Even after the output of the lighting device 13 is adjusted by the control device 14, by allowing the user to manually adjust the output of the lighting device 13, the user can adjust the amount of light with a high degree of freedom. For example, in a case where the user does not like the amount of light after the adjustment of the output of the lighting device 13 by the control device 14, by manually adjusting the output of the lighting device 13 to an amount of light intended by the user, the imaging apparatus 1 can also meet the demand for a fine light amount of the user who uses the imaging apparatus 1.

Note that the imaging apparatus 1 includes an operation unit 60 that receives a user's operation. Specifically, a power supply button 18, a recording button 19, the light amount adjustment button 20 (the light amount increase button 201 and the light amount decrease button 202), and an imaging range adjustment button 21 (a zoom button 211 and a wide button 212) constitute the operation unit 60. When the user presses each button, various functions can be used. Furthermore, the imaging apparatus 1 further includes a lighting unit 22, an interface unit 23, and a power supply terminal 24. The interface unit 23 electrically accesses a storage medium 300. Moreover, an AC adapter 200 is connected to the power supply terminal 24.

The control device 14 illustrated in Figs. 1 and 2 has a function of stopping the output of the lighting device 13. For example, the user images the cooking chamber 105 of the cooking device 100 with the imaging apparatus 1, and the user who has finished the imaging removes the imaging apparatus 1 from the cooking device 100. At this time, in order to prevent the user from directly looking at the light (the light with a large output illuminating the cooking chamber 105) emitted from the lighting device 13 of the imaging apparatus 1, the output of the lighting device 13 is stopped. Specifically, when the imaging apparatus 1 is removed from the cooking device 100, the light amount detection sensor 12 detects an amount of surrounding light. The control device 14 acquires an amount F2 of surrounding light detected by the light amount detection sensor 12. The control device 14 compares the acquired amount F2 of light with the amount F1 of light stored in the storage unit. Specifically, the control device 14 calculates a difference between the amount F2 of light and the amount F1 of light as a change amount of the amount of light. In a case where the change amount to an increase side is greater than or equal to threshold TH2, the control device 14 stops the output of the lighting device 13. The threshold TH2 is an example of a first threshold.

Note that in a case where the change amount to the increase side is greater than or equal to the threshold TH2, the control device 14 may adjust the output of the lighting device 13 to an adjustable minimum level instead of stopping the output of the lighting device 13. For example, the user images the cooking chamber 105 of the cooking device 100 with the imaging apparatus 1, and the user who has finished the imaging removes the imaging apparatus 1 from the cooking device 100. At this time, in order to prevent the user from directly looking at the light (the light with a large output illuminating the cooking chamber 105) emitted from the lighting device 13 of the imaging apparatus 1, the output of the lighting device 13 is adjusted to the adjustable minimum level.

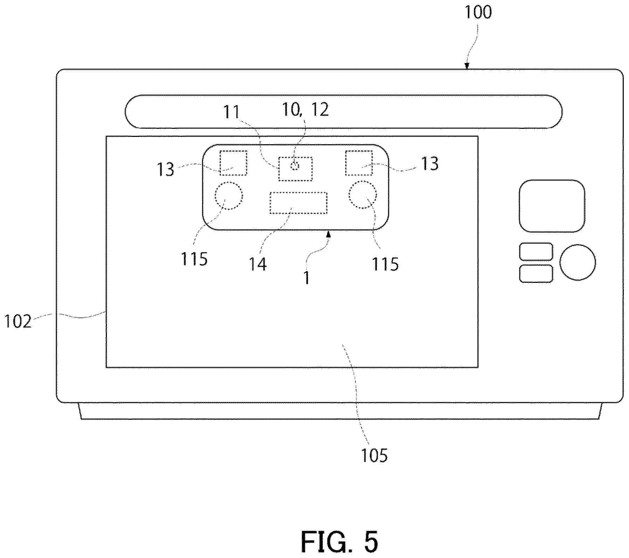

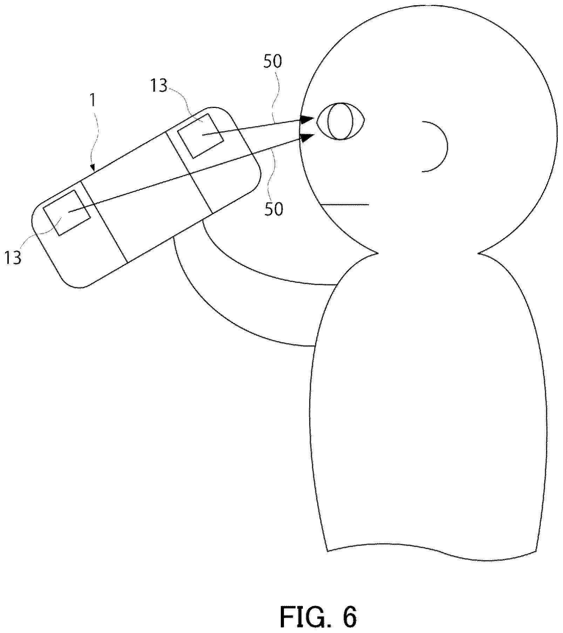

The control device 14 adjusts the output of the lighting device 13 so that the amount of light detected from the light amount detection sensor 12 maintains a constant value, and a specific situation will be described below with reference to Figs. 5 and 6.

Fig. 5 is a front view illustrating a state in which the imaging apparatus 1 is attached and fixed to the inspection window 102 of the cooking device 100. Furthermore, Fig. 6 is a diagram illustrating a state in which the user removes the imaging apparatus 1 from the inspection window 102 of the cooking device 100.

As illustrated in Fig. 5, in a case where it is desired to image the cooking chamber 105 of the cooking device 100, the two suckers 115 as attachment/detachment mechanisms provided in the imaging apparatus 1 are attached to the outside of the inspection window 102 of the cooking device 100 to fix the imaging apparatus 1. Generally, since the cooking chamber 105 of the cooking device 100 is dark, it is necessary to increase an output of the lighting device 13 to illuminate the cooking chamber 105 when imaging is performed by the imaging apparatus 1.

Therefore, the control device 14 adjusts the output of the lighting device 13 so that the amount of light detected by the light amount detection sensor 12 maintains a constant value. That is, in a dark environment, the output of the lighting device 13 is increased, and the amount of light detected by the light amount detection sensor 12 is maintained at a constant value. On the other hand, in a bright environment, the output of the lighting device 13 is decreased, and the amount of light detected by the light amount detection sensor 12 is maintained at a constant value. In this way, the output of the lighting device 13 is adjusted according to the brightness of an object to be imaged, whereby the imaging device 11 can be always operated under an appropriate amount of light.

Furthermore, the control device 14 does not adjust the output of the lighting device 13 in a case where the change amount to the increase side, which is a difference between the two amounts of light detected by the light amount detection sensor 12, is less than a threshold TH3 or in a case where the change amount to the decrease side is less than the threshold TH3. The threshold TH3 is an example of a second threshold. This assumes that the output of the lighting device 13 is not adjusted in a case where the surrounding environment (amount of light) in which the imaging apparatus 1 is used is only slightly changed. In this way, it is possible to prevent the output of the lighting device 13 from being frequently adjusted. As a result, it is possible to prevent occurrence of flickering due to frequent adjustment of the amount of light of the lighting device 13.

In a case where the imaging of the cooking chamber 105 is finished and the user removes the imaging apparatus 1 from the inspection window 102 of the cooking device 100 as illustrated in Fig. 6, an environment of the cooking chamber 105 of the cooking device 100 is changed from a dark environment to a bright environment in the room, and thus, an output of the lighting device 13 that has illuminated the cooking chamber 105 becomes small. Therefore, it is possible to provide the user with the imaging apparatus 1 capable of easily adjusting the output of the lighting device 13. Furthermore, since the output of the lighting device 13 becomes small in a bright environment, it is possible to prevent the user from directly looking at light 50 having a large output emitted from the lighting device 13, and it is possible to prevent the user from damaging the eyes.

Furthermore, in a case where the output of the lighting device 13 is stopped, the control device 14 causes the lighting device 13 to project light when the change amount to the decrease side, which is a difference between the two amounts of light detected by the light amount detection sensor 12, becomes greater than or equal to a threshold TH4. The threshold TH4 is an example of a third threshold. This assumes that the lighting device 13 is caused to project light in a case where the output of the lighting device 13 is stopped, for example, in a case where the user attaches the imaging apparatus 1 to the cooking device 100 (when in a dark environment). In this way, even in a state where the output of the lighting device 13 is stopped, the cooking chamber 105 of the cooking device 100 can be illuminated when the user attaches the imaging apparatus 1 to the cooking device 100. As a result, the imaging apparatus 1 capable of easily adjusting the output of the lighting device 13 can be provided to the user.

Note that the amount of light serving as the threshold TH1 when the control device 14 adjusts the output of the lighting device 13 is not a constant value, and may be a value having a range. Specifically, for example, instead of the amount of light detected by the light amount detection sensor 12 being a constant value, the amount of light may be in a constant range.

Furthermore, in a case where the control device 14 adjusts the output of the lighting device 13 but cannot reach a target amount of light (a certain value or a certain value in a range), the control device 14 only adjusts the output of the lighting device 13 so as to approach the target amount of light within an adjustable range.

### [Second Embodiment]

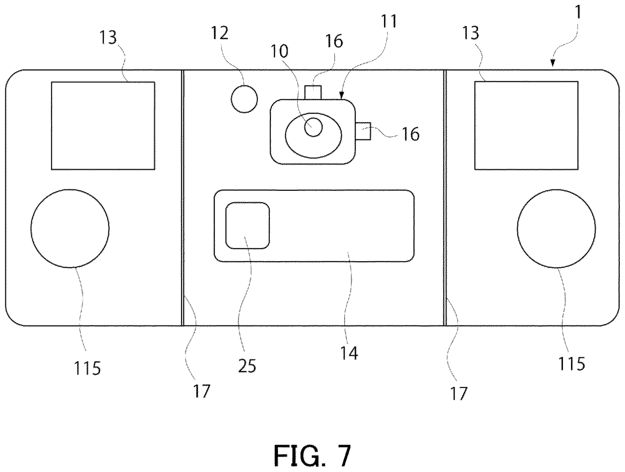

Fig. 7 is a front view illustrating an imaging apparatus 1 according to a second embodiment. In the second embodiment, portions different from those of the first embodiment will be mainly described.

An imaging apparatus 1 includes an imaging device 11, a light amount detection sensor 12, two lighting devices 13, and a control device 14. In the second embodiment, an image sensor 10 of the imaging device 11 does not function as the light amount detection sensor 12 as in the first embodiment, but the light amount detection sensor 12 is separately provided in the imaging apparatus 1.

The light amount detection sensor 12 is provided, for example, in the vicinity of the imaging device 11 in front of the imaging apparatus 1 as illustrated in Fig. 7.

The image sensor 10 of the imaging device 11 does not function as the light amount detection sensor 12 as in the first embodiment, but the light amount detection sensor 12 is separately provided in the imaging apparatus 1, so that the light amount detection sensor 12 can be provided by selecting an arbitrary place inside and outside the imaging device 11.

That is, the place where the light amount detection sensor 12 is provided is not limited to the vicinity of the imaging device 11, and may be any place as long as the amount of light in the imaging direction can be detected. For example, the light amount detection sensor 12 may be provided in the imaging device 11.

### [Other Embodiments]

It is also preferable that the imaging apparatus 1 includes an attachment detection device that detects whether the imaging apparatus 1 is attached and fixed to the cooking device 100. The attachment detection device can be configured by, for example, a proximity sensor provided on a front surface of the imaging apparatus 1.

In a case where the user manually adjusts an output of the lighting device 13 after the output of the lighting device 13 is adjusted by the control device 14, it is also preferable that the control device 14 further controls the output of the lighting device 13 to be adjusted thereafter. Specifically, after the user manually adjusts the output of the lighting device 13, in a case where attachment is detected by an attachment detection device, the control device 14 controls the output of the lighting device 13 to be adjusted. More specifically, when the user uses the imaging apparatus 1 with the imaging apparatus 1 removed from the cooking device 100, the user manually adjusts the output of the lighting device 13. Thereafter, in a case where the imaging apparatus 1 is attached to the cooking device 100 (when the attachment is detected by the attachment detection device), the output of the lighting device 13 manually adjusted by the user serves the purpose, and thus, it is not necessary to maintain the output. Therefore, in a case where the attachment is detected by the attachment detection device, even after the user manually adjusts the amount of light of the lighting device 13, the control device 14 adjusts the output of the lighting device 13 to be an output suitable for imaging. In this way, a good image can always be obtained.

Furthermore, for example, it is preferable to change the threshold TH1 to the threshold TH4 between the case where the attachment is detected by the attachment detection device and the case where the attachment is not detected by the attachment detection device. The reason is that the output of the lighting device 13 can be adjusted according to the surrounding environment.

In the embodiments described with reference to Figs. 1 to 7, the imaging apparatus 1 is temporarily fixed to the cooking device 100, but an attachment object to which the imaging apparatus 1 is temporarily fixed is not limited to the cooking device 100. For example, the attachment object to which the imaging apparatus 1 is temporarily fixed includes a water tank, an insect cage, a train, a passenger vehicle, and an airplane.

For example, in a case where the imaging apparatus 1 is temporarily fixed to a water tank, the imaging apparatus 1 may image the inside from the outside of the water tank via a transparent case of the water tank. In a case where the imaging apparatus 1 is temporarily fixed to an insect cage, the imaging apparatus 1 may image the inside from the outside of the insect cage via a transparent case of the insect cage or a window portion of the insect cage. In a case where the imaging apparatus 1 is temporarily fixed to a train, a passenger vehicle, or an airplane, the imaging apparatus 1 may image the outside from the inside of the train, the passenger vehicle, or the airplane via a window of the train, the passenger vehicle, or the airplane.

Furthermore, the imaging apparatus 1 can perform imaging even in a case where the imaging apparatus 1 is detached from the attachment object. For example, it is also possible to image an object to be imaged such as an ingredient with an amount of light suitable for imaging in a state where the imaging apparatus 1 is placed on a desk.

The embodiments of the present invention have been described above with reference to the drawings. However, the present invention is not limited to the above embodiments, and can be implemented in various aspects without departing from the gist thereof. For easy understanding, the drawings schematically illustrate each constituent element mainly, and the thickness, length, number, interval, and the like of each illustrated constituent element are different from actual ones for convenience of drawing creation. Furthermore, the shape and the like of each constituent element shown in the above embodiments are merely examples, and are not particularly limited, and various modifications can be made without departing from the configuration of the present invention.

### Industrial Applicability

The imaging apparatus of the present invention is particularly useful for imaging an object being cooked by being attached to an inspection window of a cooking device.

### Reference Signs List

- 1: imaging apparatus
- 11: imaging unit (imaging device)
- 12: sensor unit (light amount detection sensor)
- 13: lighting device
- 18: power supply button
- 19: recording button
- 20: light amount adjustment button
- 21: imaging range adjustment button
- 22: lighting unit
- 23: interface unit
- 24: power supply terminal
- 25: wireless communication device
- 60: operation unit
- 100: cooking device
- 102: inspection window
- 105: cooking chamber
- 115: sucker
- 400: imaging range
- 500: imaging direction
- F1, F2: amount of light
- TH1, TH2, TH3, TH4: threshold

## Claims

1. An imaging apparatus temporarily attached to an outside of an inspection window of a cooking device to image a cooking chamber of the cooking device, the imaging apparatus comprising:
an imaging unit configured to generate imaging data;
a lighting device configured to project light in an imaging direction of the imaging unit;
a sensor unit configured to detect an amount of light in the imaging direction; and
a control device configured to adjust an output of the lighting device on the basis of the amount of light detected by the sensor unit.

2. The imaging apparatus according to claim 1, wherein the imaging unit functions as the sensor unit.

3. The imaging apparatus according to claim 1, wherein the control device adjusts an output of the lighting device so that the amount of light maintains a constant value.

4. The imaging apparatus according to claim 1, wherein the control device stops the output of the lighting device or adjusts the output to an adjustable minimum level in a case where a change amount to an increase side of the amount of light is greater than or equal to a first threshold.

5. The imaging apparatus according to claim 1, wherein the control device does not adjust the output of the lighting device in a case where a change amount to an increase side of the amount of light is less than a second threshold or in a case where a change amount to a decrease side of the amount of light is less than the second threshold.

6. The imaging apparatus according to claim 1, wherein the control device causes the lighting device to project light when a change amount to a decrease side of the amount of light becomes greater than or equal to a third threshold in a state where the output of the lighting device is stopped.

7. The imaging apparatus according to claim 1, further comprising an operation unit configured to receive an operation of a user,
wherein when the operation unit receives the operation after adjusting the output of the lighting device or after stopping the output of the lighting device, the control device adjusts the output on the basis of the operation.
